# EUROPÄISCHE PATENTANMELDUNG

(11) **EP 2 568 488 A1**
(43) Veröffentlichungstag der Anmeldung: **13.03.2013**
(21) Anmeldenummer: 12165489.1
(22) Anmeldetag: 25.04.2012
(51) Int. Cl.: H01H 9/02, H02G 3/12

(54) **Elektrisches/elektronisches Gerät**

(30) Priorität: 07.09.2011 DE 102011053341
(71) Anmelder: Insta Elektro GmbH, 58509 Lüdenscheid (DE)
(72) Erfinder: Stöhr, Axel, 42477 Radevormwald (DE); Hanke, Michael, 58642 Iserlohn (DE); Greis, Stefan, 58515 Lüdenscheid (DE); Schlicht, Thomas, 58093 Hagen (DE); Voigtländer, Andreas, 58509 Lüdenscheid (DE)

(57) **Zusammenfassung**

Es wird ein elektrisches/elektronisches Gerät der Gebäudesystemtechnik vorgeschlagen, welches mit einem die funktionsnotwendigen Bauteile aufnehmenden Gehäuse versehen ist, wobei es für die Bedienung durch den Benutzer zumindest eine Bedieneinheit aufweist. Zu dem Zweck, ein elektrisches/elektronisches Gerät der Gebäudesystemtechnik zu schaffen, welches die modulartige Verwendung von Funktionskomponenten eines Gerätetyps bei anderen Gerätetypen in einem großen Umfang auf besonders einfache Art und Weise möglich macht, ist der der Bedieneinheit abgewandten Gehäusewand für die Kopplung mit einem Adapter zumindest ein Halteelement und zumindest ein für die Übertragung von Daten und/oder Energie vorgesehenes Übertragungssystem zugeordnet.

## Beschreibung

Die vorliegende Erfindung geht von einem gemäß Oberbegriff des Hauptanspruches konzipierten elektrischen/elektronischen Gerät der Gebäudesystemtechnik mit einer Bedieneinheit aus.

Derartige elektrische/elektronische Geräte sind in der Regel dafür vorgesehen, dem Benutzer auf besonders komfortable Art und Weise die Bedienung einer Vielzahl von Funktionen zu ermöglichen. Sind solche elektrischen/elektronischen Geräte als Installationsgeräte für die Gebäudesystemtechnik ausgebildet, sind damit üblicherweise verschiedene in Gebäuden installierte Aktoren und Sensoren (Jalousieantriebe, Beleuchtungseinrichtungen, Fühler, Wächter usw.) bedarfsgerecht zu beeinflussen. Zu diesem Zweck sind die unterschiedlichsten Installationsgeräte, wie Schalter, Taster, Dimmer usw. bekannt geworden. Oftmals sind solche elektrischen/elektronischen Installationsgeräte zum Anschluss an ein Bussystem vorgesehen. In jüngerer Vergangenheit wurden solche elektrischen/elektronischen Installationsgeräte zur komfortablen Bedienung mehr und mehr mit einem Touchscreen ausgerüstet. Häufig sind solche elektrischen/elektronischen Geräte für einen drahtgebundenen oder drahtlosen (z. B. Funk) Betrieb vorgesehen.

Durch die DE 20 2004 020 771 U1 sind dem Oberbegriff des Hauptanspruches entsprechende elektrische/elektronische Geräte bekannt geworden. Diese elektrischen/elektronischen Geräte weisen ein die funktionsnotwendigen Bauteile aufnehmendes Gehäuse auf, wobei zur Bedienung durch den Benutzer zumindest eine Bedieneinheit vorgesehen ist. Im vorliegenden Fall ist ein Gerätetyp für den drahtgebundenen und ein Gerätetyp für den funkbasierten Betrieb vorgesehen. Diese elektrischen/elektronischen Gerätetypen weisen einen stark voneinander abweichenden Aufbau auf, so dass die Verwendung von Funktionskomponenten des einen Gerätetyps bei dem anderen Gerätetyp nicht, beziehungsweise nur mit sehr großem Aufwand möglich ist.

Der vorliegenden Erfindung liegt deshalb die Aufgabe zugrunde, ein elektrisches/elektronisches Gerät zu schaffen, welches die modulartige Verwendung von Funktionskomponenten eines Gerätetyps bei anderen Gerätetypen in einem großen Umfang auf besonders einfache Art und Weise möglich macht.

Diese Aufgabe wird durch die im Hauptanspruch angegebenen Merkmale gelöst. Bei einem solchermaßen ausgebildeten elektrischen/elektronischen Gerät ist besonders vorteilhaft, dass sich auf einfache Art und Weise verschiedene Nutzungsmöglichkeiten wie z. B. eine direkte Wandmontage, Kopplung mit einem Unterputzeinsatz, Verwendung als Fernbedienung usw. realisieren lassen.

Weiterhin ist besonders vorteilhaft, wenn der Adapter zumindest eine die Funktionen des elektrischen/elektronischen Gerätes unterstützende Komponente aufweist, weil dadurch eine bauliche Entlastung des elektrischen/elektronischen Gerätes und/oder eine einfache Implementierung zusätzlicher Funktionen möglich sind. Somit können zusätzliche Funktionen auf einfache Art und Weise hinzugefügt werden, auch wenn diese nur bedarfsweise benötigt werden. Eine Abänderung oder ein Austausch des elektrischen/elektronischen Gerätes zu diesem Zweck ist vorteilhafter Weise nicht notwendig.

Weitere vorteilhafte Ausgestaltungen des erfindungsgemäßen Gegenstandes sind in den Unteransprüchen angegeben. Anhand dreier Ausführungsbeispiele sei der erfindungsgemäße Gegenstand näher beschrieben, dabei zeigen:
- Fig. 1:: prinziphaft ein erstes Ausführungsbeispiel eines solchen elektrischen/elektronischen Gerätes, vorgesehen für die direkte Wandmontage in Explosionsdarstellung;
- Fig. 2:: prinziphaft ein zweites Ausführungsbeispiel eines solchen elektrischen/elektronischen Gerätes, vorgesehen für die Kopplung mit einem Unterputzeinsatz in Explosionsdarstellung;
- Fig. 3:: prinziphaft ein drittes Ausführungsbeispiel eines solchen elektrischen/elektronischen Gerätes, vorgesehen zur Verwendung als Fernbedienung im Vollschnitt;
- Fig. 4:: prinziphaft die für die Kopplung mit dem Adapter vorgesehene Gehäusewand des elektrischen/elektronischen Gerätes;
- Fig. 5: prinziphaft einen Vollschnitt eines elektrischen/elektronischen Gerätes ohne Adapter;
- Fig. 6: prinziphaft einen räumlich dargestellten Adapter, welcher zur Kopplung mit einem gemäß Fig. 1 ausgebildeten elektrischen/elektronischen Gerät vorgesehen ist;
- Fig. 7: prinziphaft einen räumlich dargestellten Adapter, welcher zur Kopplung mit einem gemäß Fig. 2 ausgebildeten elektrischen/elektronischen Gerät vorgesehen ist.

Wie aus den Figuren hervorgeht, besteht ein solches elektrisches/elektronisches Gerät hauptsächlich aus einem mehrere Funktionskomponenten aufnehmenden Gehäuse 1, welches an seiner Oberseite mit einer Bedieneinheit 2 versehen ist. Die der Bedieneinheit 2 abgewandte Gehäusewand 3 ist zur Kopplung mit einem Adapter 4 mit zwei schienenartig ausgebildeten Halteelementen 5 versehen. Außerdem sind im Gehäuse 1 der Gehäusewand 3 zugeordnet und/oder im Adapter 4 jeweils vier Magnet M angeordnet, die zur sicheren Befestigung des Gehäuses 1 am Adapter 4 dienen, also ebenfalls als Halteelemente 5 zu bezeichnen sind. Zur Übertragung von Daten und/oder Energie ist zudem an der der Bedieneinheit 2 abgewandten Gehäusewand 3 des elektrischen/elektronischen Gerätes ein Übertragungssystem 6 vorgesehen. Damit dem Benutzer eine besonders komfortable Bedienung möglich ist, weist die Bedieneinheit 2 einen Touchscreen mit haptischer Rückmeldung auf.

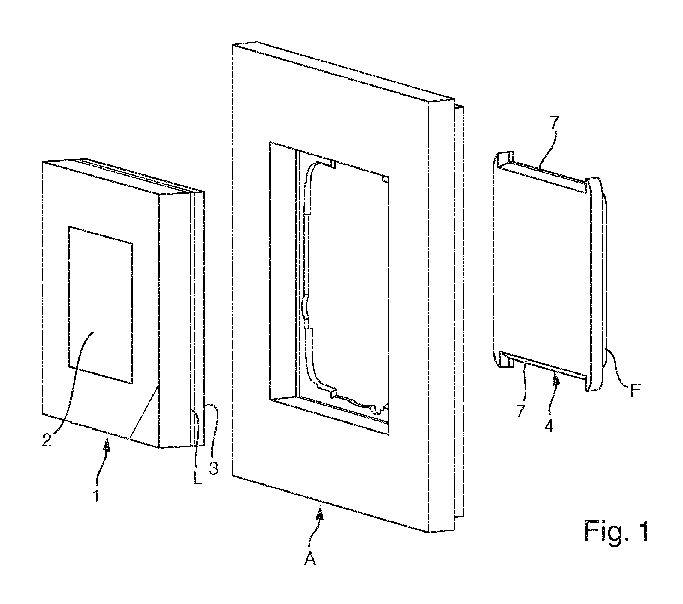

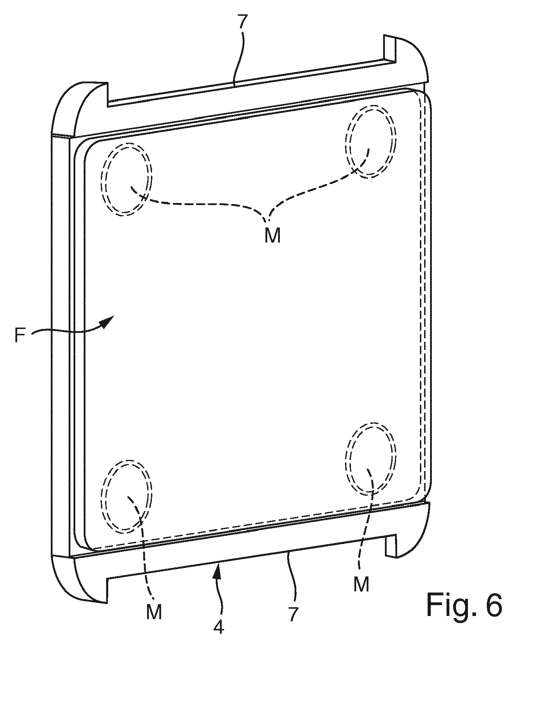

Wie insbesondere aus Figur 1 und Figur 6 hervorgeht, ist der Adapter 4 dafür vorgesehen, die direkte Befestigung des elektrischen/elektronischen Gerätes an einer Gebäudewand sicherzustellen. Der Adapter 4 weist somit nur mechanische und magnetische Eigenschaften auf und kommt mit seinen beiden Befestigungskanten 7 zwischen den beiden schienenartig ausgeführten Halteelementen 5 der Gehäuseseite 3 zu liegen, wobei - der Einfachheit halber nicht dargestellte - Rastnasen der schienenartigen Halteelemente 5 und die acht miteinander in Wirkverbindung kommenden Magnete M (Haltelemente 5) für eine sichere Befestigung des Gehäuses 1 beziehungsweise der Bedieneinheit 2 am Adapter 4 Sorge tragen. Wie insbesondere aus Figur 6 hervorgeht, ist die Rückseite des Adapters 4 mit einer beidseitig klebenden Folie F versehen, um eine sichere Befestigung an einer Gebäudewand zu ermöglichen. Hinter der Folie F sind die vier im Adapter 4 angeordneten Magnete M deutlich erkennbar, welche mit den vier im Gehäuse 1 entsprechend angeordneten Magneten M (Halteelemente 5) für eine sichere Befestigung zusammen wirken. Selbstverständlich kann, um eine sichere Befestigung an einer Gebäudewand zu gewährleisten, auch eine Schraubbefestigungslösung vorgesehen sein. Um eine formschöne Installation zu gewährleisten, ist ein Abdeckrahmen A vorgesehen, welcher zwischen der Unterseite 3 des Gehäuses 1 beziehungsweise der Bedieneinheit 2 und der Gebäudewand angeordnet ist.

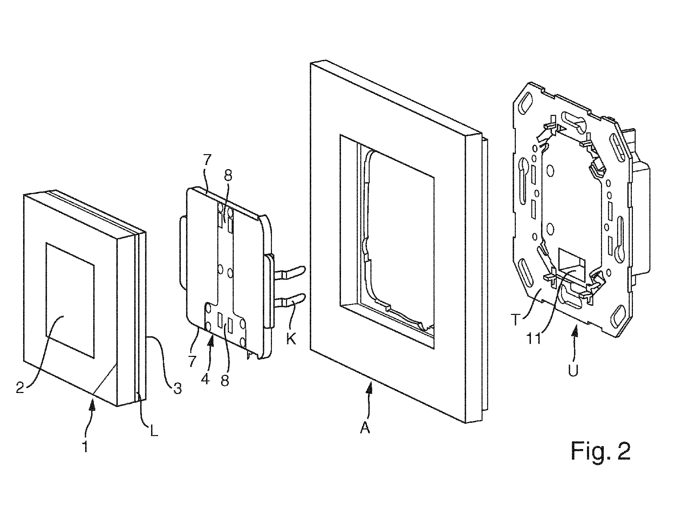

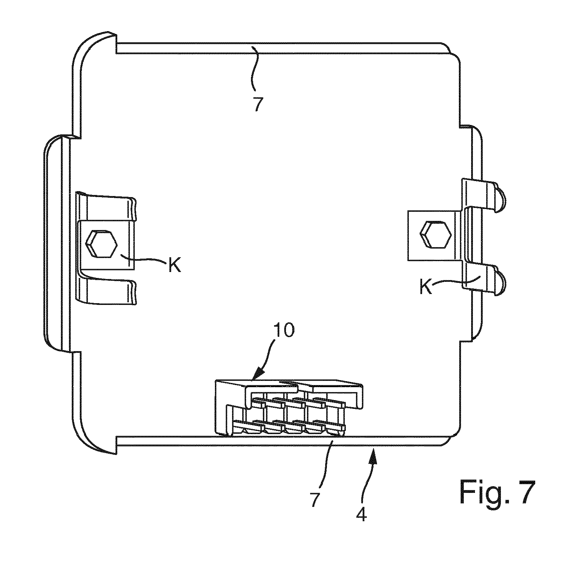

Wie insbesondere aus Figur 2 und Figur 7 hervorgeht, ist der Adapter 4 dafür vorgesehen, das elektrische/elektronische Gerät auf einfache Art und Weise an einen Unterputzeinsatz U anzukoppeln bzw. die Halterung an diesem sicherzustellen. Der Adapter 4 weist somit neben seinen mechanischen, die Befestigung bzw. Kopplung sicherstellenden Eigenschaften auch elektrische Eigenschaften auf, damit die Übertragung von Daten und Energie gewährleistet ist. Zu diesem Zweck weist das Übertragungssystem 6 des elektrischen/elektronischen Gerätes acht elektrische Kontaktelemente 6a auf. Die acht elektrischen Kontaktelemente 6a sind jeweils als sogenannte Andruckkontakte ausgeführt und kommen zur Übertragung von Daten und Energie kontaktgebend an entsprechend ausgeführten Kontaktflächen 8 des Adapters 4 zur Anlage. Damit das Gehäuse 1 beziehungsweise die Bedieneinheit 2 um 180 Grad verdreht ausgerichtet mit dem Adapter 4 verbunden werden kann, sind acht Kontaktflächen 8 zu einem Kontaktfeld zusammen gefasst und am Adapter 4 zwei Kontaktfelder vorhanden, die entsprechend versetzt zueinander angeordnet sind. Es sind am Adapter 4 also sechzehn Kontaktflächen 8, aufgeteilt in zwei Kontaktfelder vorhanden. Zur mechanischen Befestigung kommt der Adapter 4 mit seinen beiden Befestigungskanten 7 hinter den beiden schienenartig ausgeführten Haltelementen 5 der Gehäusewand 3 zu liegen. Deshalb wird der Adapter 4 mit seinen beiden Befestigungselementen zwischen die beiden schienenartigen Halteelemente 5 eingeschoben, wobei letztendlich eine sichere Kontaktierung zwischen den acht Kontaktelementen 6a und den acht zugeordneten Kontaktflächen 8 hergestellt wird. Wie insbesondere aus Figur 7 hervorgeht, ist die Rückseite des Adapters 4 mit zwei Klemmfedern K ausgerüstet, damit eine sichere Befestigung am Unterputzeinsatz U gewährleistet ist. Zu diesem Zweck wirken die beiden Klemmfedern K haltend mit entsprechenden Ausnehmungen des Tragrahmens T des Unterputzeinsatzes U zusammen. Eine Steckereinheit 10 ist vorgesehen, um eine sichere elektrische Verbindung mit einer Buchseneinheit 11 des Unterputzeinsatzes U herzustellen. Um eine formschöne Installation zu gewährleisten, ist ein Abdeckrahmen A vorgesehen, welcher zwischen der Unterseite 3 des elektrischen/elektronische Gerätes und der Gebäudewand bzw. der Oberseite des Unterputzeinsatzes U angeordnet ist.

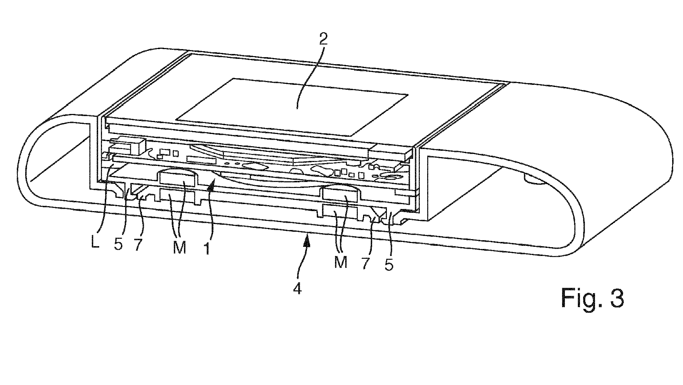

Wie insbesondere aus Figur 3 hervorgeht, ist der Adapter 4 gehäuseseitig derart ausgeführt, dass eine Verwendung des elektrischen/elektronischen Gerätes als Fernbedienung möglich ist. Zu diesem Zweck weist das elektrische/elektronische Gerät ein Übertragungssystem 6 auf, welches zur Fernbedienung mit einer Funkeinheit ausgerüstet ist. Zur wiederentnehmbaren Anordnung des Gehäuses 1 beziehungsweise des Bedienteiles 2 aus dem Adapter 4, sind im Gehäuse 1 und im Adapter 4 jeweils vier miteinander zusammen wirkende Magnete M vorhanden. Die Magnete M stellen einerseits eine sichere Halterung des elektrischen/elektronischen Gerätes im Adapter 4 sicher, ermöglichen aber andererseits, dass das Gehäuse 1 beziehungsweise dass das Bedienteil 2 (elektrisches/elektronisches Gerät) im Bedarfsfalle einfach wieder aus dem Adapter 4 entnommen werden kann.

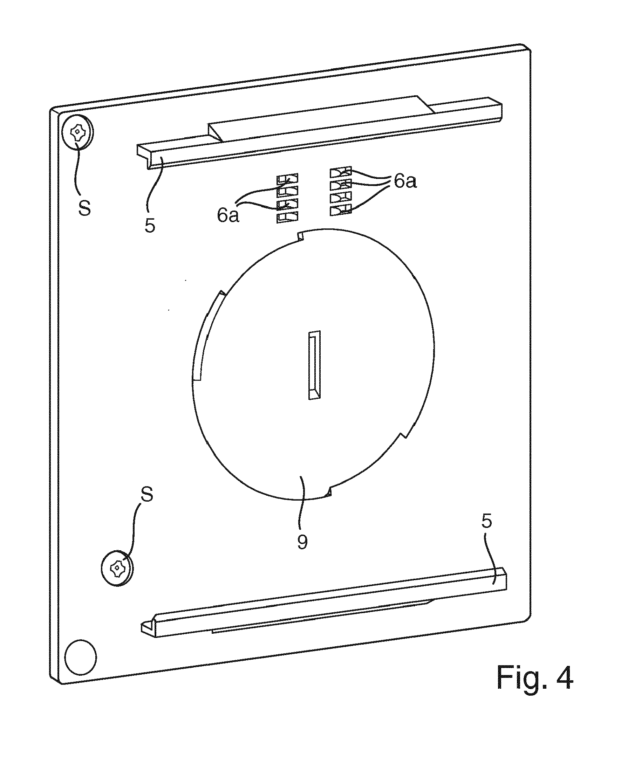

Wie insbesondere aus Figur 4 hervorgeht, sind die beiden schienenartig ausgeführten Halteelemente 5 einstückig an die Rückseite der Gehäusewand 3 angeformt, welche - der Einfachheit halber nicht dargestellte - Rastnasen beinhalten. In zwei Gruppen sind die acht elektrischen Kontaktelemente 6a angeordnet, um die Übertragung von Daten und Energie zu gewährleisten. Über vier Schrauben S ist die der Bedieneinheit 2 abgewandte Gehäusewand 3 am Gehäuse 1 festgelegt. Um zum Beispiel bei einem Funkbetrieb die elektrische Energieversorgung zu gewährleisten, ist eine Batterie B im Innenraum des Gehäuses 1 angeordnet, wobei das Batteriefach mit einem drehbaren Deckel 9 verschlossen ist.

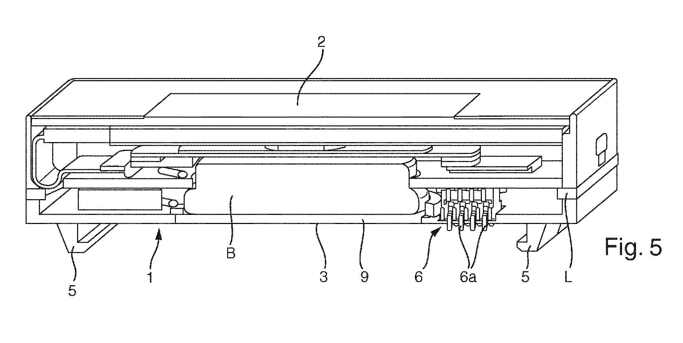

Wie insbesondere aus Figur 5 hervorgeht, ist das elektrische/elektronische Gerät beispielsweise als sogenannter Tastsensoraufsatz ausgeführt. Die Bedieneinheit 2 ist mit einem Touchscreen ausgerüstet, welcher haptische Rückmeldungseigenschaften für eine komfortable und sichere Bedienung aufweist. Zur Beleuchtung sind im Gehäuse 1 mehrere Leuchtmittel vorgesehen, welche ihr Licht über einen umlaufenden Lichtleiter L und über die, mit dem Touchscreen versehenen, Oberseite des elektrischen/elektronischen Gerätes nach außen abgeben. Um eine komfortable Aktivierung des elektrischen/elektronischen Gerätes zu ermöglichen, ist im Gehäuse 1 ein Infrarotbewegungssensor vorhanden.

Der Adapter 4 ist so ausgeführt, dass er auf einfache Art und Weise mit einer USB-Schnittstelle ausgerüstet werden kann. Um die Funktionen des elektrischen/elektronischen Gerätes zu unterstützen, kann der Adapter 4 des Weiteren mit einer Datenspeichereinheit bzw. Datenspeichererweiterung ausgerüstet sein. Somit können z. B. Applikationsprogramme in die Datenspeichereinheit beziehungsweise in die Datenspeichererweiterung des Adapters 4 abgelegt werden. Ebenfalls lässt sich auf einfache Art und Weise der Adapter 4 so ausführen, dass die für den Baustellenbetrieb notwendigen Grundfunktionen ohne das elektrische/elektronische Gerät betrieben werden können. Vorteilhafterweise lässt sich auch der Adapter 4 so ausrüsten, dass zumindest ein Teil der für den Funkbetrieb notwendigen Bauteile bzw. Einheiten in diesem vorhanden sind. Ist ein solcher Adapter 4 mit einem Mikrofon und/oder Lautsprecher ausgerüstet, bietet sich auch die Verwendung als sogenanntes "Babyfon" an. Auch kann der Adapter 4 mit einem eigenen Energiespeicher ausgerüstet sein.

## Patentansprüche

1. Elektrisches/elektronisches Gerät der Gebäudesystemtechnik, mit einem funktionsnotwendige Bauteile aufnehmenden Gehäuse, wobei zur Bedienung durch den Benutzer zumindest eine Bedieneinheit vorgesehen ist, **dadurch gekennzeichnet, dass** der der Bedieneinheit (2) abgewandten Gehäusewand (3) für die Kopplung mit einem Adapter (4) zumindest ein Halteelement (5) und zumindest ein für die Übertragung von Daten und/oder Energie vorgesehenes Übertragungssystem (6) zugeordnet sind.

2. Elektrisches/elektronisches Gerät nach Anspruch 1, **dadurch gekennzeichnet, dass** die zumindest eine Bedieneinheit (2) zumindest einen Touchscreen aufweist.

3. Elektrisches/elektronisches Gerät nach einem der Ansprüche 1 oder 2, **dadurch gekennzeichnet, dass** die zumindest eine Bedieneinheit (2) zumindest ein manuell zu betätigendes Schaltelement aufweist.

4. Elektrisches/elektronisches Gerät nach Anspruch 1 bis 3, **dadurch gekennzeichnet, dass** zumindest ein mit dem Adapter (4) zusammen wirkendes Halteelement (5) rasthakenförmig ausgebildet ist.

5. Elektrisches/elektronisches Gerät nach Anspruch 1 bis 4, **dadurch gekennzeichnet, dass** zumindest ein mit dem Adapter (4) zusammen wirkendes Halteelement (5) schienenartig ausgebildet ist.

6. Elektrisches/elektronisches Gerät nach Anspruch 1 bis 5, **dadurch gekennzeichnet, dass** zumindest ein Haltelement (5) magnetische Eigenschaften aufweist und zur Halterung mit einem ebenfalls magnetische Eigenschaften aufweisenden Element des Adapters (4) zusammenwirkt.

7. Elektrisches/elektronisches Gerät nach einem der Ansprüche 1 bis 6,
**dadurch gekennzeichnet, dass** zumindest ein Bauteil des Übertragungssystems (6) als elektrisches Kontaktelement (6a) ausgeführt ist.

8. Elektrisches/elektronisches Gerät nach einem der Ansprüche 1 bis 7,
**dadurch gekennzeichnet, dass** das Übertragungssystem (6) zumindest mit einer Funkeinheit ausgerüstet ist.

9. Elektrisches/elektronisches Gerät nach einem der Ansprüche 1 bis 8,
**dadurch gekennzeichnet, dass** zumindest ein Bauteil des Übertragungssystems (6) als elektrische Spule ausgeführt ist.

10. Elektrisches/elektronisches Gerät nach einem der Ansprüche 1 bis 9,
**dadurch gekennzeichnet, dass** das Übertragungssystems (6) als optisch arbeitende Einheit ausgeführt ist.

11. Elektrisches/elektronisches Gerät nach einem der Ansprüche 1 bis 10, **dadurch gekennzeichnet, dass** die dem elektrischen/elektronischen Gerät abgewandte Seite des Adapters (4) zur direkten Befestigung an einer Gebäudewand vorgesehen ist.

12. Elektrisches/elektronisches Gerät nach einem der Ansprüche 1 bis 11, **dadurch gekennzeichnet, dass** die dem elektrischen/elektronischen Gerät abgewandte Seite des Adapters (4) zur Halterung und Kopplung mit einem Unterputzeinsatz (U) der Gebäudesystemtechnik vorgesehen ist.

13. Elektrisches/elektronisches Gerät nach einem der Ansprüche 1 bis 12, **dadurch gekennzeichnet, dass** der Adapter (4) gehäuseseitig als mobile Fernbedienung ausgeführt ist.

14. Elektrisches/elektronisches Gerät nach einem der Ansprüche 1 bis 13,**dadurch gekennzeichnet, dass** zumindest ein mit dem Adapter (4) zusammen wirkendes Halteelement (5) lageveränderlich an der der Bedieneinheit (2) abgewandten Gehäusewand (3) angebracht ist.

15. Elektrisches/elektronisches Gerät nach einem der Ansprüche 1 bis 14, **dadurch gekennzeichnet, dass** der Adapter (4) zumindest eine die Funktionen des elektrischen/elektronischen Gerätes unterstützende Komponente aufweist.

16. Elektrisches/elektronisches Gerät nach einem der Ansprüche 1 bis 15, **dadurch gekennzeichnet, dass** der Adapter (4) mit zumindest einer USB-Schnittstelle ausgerüstet ist.

17. Elektrisches/elektronisches Gerät nach einem der Ansprüche 1 bis 16, **dadurch gekennzeichnet, dass** der Adapter (4) mit zumindest einem Leuchtmittel ausgerüstet ist.

18. Elektrisches/elektronisches Gerät nach einem der Ansprüche 1 bis 17, **dadurch gekennzeichnet, dass** der Adapter (4) mit zumindest einer Datenspeichereinheit ausgerüstet ist.

19. Elektrisches/elektronisches Gerät nach einem der Ansprüche 1 bis 18, **dadurch gekennzeichnet, dass** der Adapter (4) mit zumindest einem Energiespeicher ausgerüstet ist.

20. Elektrisches/elektronisches Gerät nach einem der Ansprüche 1 bis 19, **dadurch gekennzeichnet, dass** der Adapter (4) mit zumindest einer den Funkbetrieb ermöglichenden Einheit ausgerüstet ist.

21. Elektrisches/elektronisches Gerät nach einem der Ansprüche 1 bis 20, **dadurch gekennzeichnet, dass** die Kontaktflächen 8 des Adapters (4) derart ausgeführt und angeordnet sind, so dass die Bedieneinheit (2) in verschiedenen Ausrichtungen an den Adapter (4) anzukoppeln ist.

## Geänderte Patentansprüche

### Geänderte Patentansprüche gemäss Regel 137(2) EPÜ.

**1.** Elektrisches/elektronisches Gerät der Gebäudesystemtechnik, mit einem funktionsnotwendige Bauteile aufnehmenden Gehäuse (1), wobei zur Bedienung durch den Benutzer zumindest eine Bedieneinheit (2) vorgesehen ist, und wobei der der Bedieneinheit (2) abgewandten Gehäusewand (3) für die Kopplung mit einem Adapter (4) zumindest ein Halteelement (5) und zumindest ein für die Übertragung von Daten und/oder Energie vorgesehenes Übertragungssystem (6) zugeordnet sind, **dadurch gekennzeichnet, dass** zumindest ein mit dem Adapter (4) zusammen wirkendes Halteelement (5) schienenartig ausgebildet ist, und dass zumindest ein Haltelement (5) magnetische Eigenschaften aufweist und zur Halterung mit einem ebenfalls magnetische Eigenschaften aufweisenden Element des Adapters (4) zusammenwirkt, und dass das Übertragungssystem (6) mehrere Kontaktelemente (6a) aufweist, die mit mehreren Kontaktflächen (8) des Adapters (4) derart zusammenwirken, so dass die Bedieneinheit (2) in verschiedenen Ausrichtungen an den Adapter (4) anzukoppeln ist.

**2.** Elektrisches/elektronisches Gerät nach Anspruch 1, **dadurch gekennzeichnet, dass** die zumindest eine Bedieneinheit (2) zumindest einen Touchscreen aufweist.

**3.** Elektrisches/elektronisches Gerät nach einem der Ansprüche 1 oder 2, **dadurch gekennzeichnet, dass** die zumindest eine Bedieneinheit (2) zumindest ein manuell zu betätigendes Schaltelement aufweist.

**4.** Elektrisches/elektronisches Gerät nach Anspruch 1 bis 3, **dadurch gekennzeichnet, dass** zumindest ein mit dem Adapter (4) zusammen wirkendes Halteelement (5) rasthakenförmig ausgebildet ist.

**5.** Elektrisches/elektronisches Gerät nach einem der Ansprüche 1 bis 4,
**dadurch gekennzeichnet, dass** das Übertragungssystem (6) zumindest mit einer Funkeinheit ausgerüstet ist.

**6.** Elektrisches/elektronisches Gerät nach einem der Ansprüche 1 bis 5,
**dadurch gekennzeichnet, dass** zumindest ein Bauteil des Übertragungssystems (6) als elektrische Spule ausgeführt ist.

**7.** Elektrisches/elektronisches Gerät nach einem der Ansprüche 1 bis 6,
**dadurch gekennzeichnet, dass** das Übertragungssystems (6) als optisch arbeitende Einheit ausgeführt ist.

**8.** Elektrisches/elektronisches Gerät nach einem der Ansprüche 1 bis 7,
**dadurch gekennzeichnet, dass** die dem elektrischen/elektronischen Gerät abgewandte Seite des Adapters (4) zur direkten Befestigung an einer Gebäudewand vorgesehen ist.

**9.** Elektrisches/elektronisches Gerät nach einem der Ansprüche 1 bis 8,
**dadurch gekennzeichnet, dass** die dem elektrischen/elektronischen Gerät abgewandte Seite des Adapters (4) zur Halterung und Kopplung mit einem Unterputzeinsatz (U) der Gebäudesystemtechnik vorgesehen ist.

**10.** Elektrisches/elektronisches Gerät nach einem der Ansprüche 1 bis 9,
**dadurch gekennzeichnet, dass** der Adapter (4) gehäuseseitig als mobile Fernbedienung ausgeführt ist.

**11.** Elektrisches/elektronisches Gerät nach einem der Ansprüche 1 bis 10,
**dadurch gekennzeichnet, dass** zumindest ein mit dem Adapter (4) zusammen wirkendes Halteelement (5) lageveränderlich an der der Bedieneinheit (2) abgewandten Gehäusewand (3) angebracht ist.

**12.** Elektrisches/elektronisches Gerät nach einem der Ansprüche 1 bis 11,
**dadurch gekennzeichnet, dass** der Adapter (4) zumindest eine die Funktionen des elektrischen/elektronischen Gerätes unterstützende Komponente aufweist.

**13.** Elektrisches/elektronisches Gerät nach einem der Ansprüche 1 bis 12,
**dadurch gekennzeichnet, dass** der Adapter (4) mit zumindest einer USB-Schnittstelle ausgerüstet ist.

**14.** Elektrisches/elektronisches Gerät nach einem der Ansprüche 1 bis 13,
**dadurch gekennzeichnet, dass** der Adapter (4) mit zumindest einem Leuchtmittel ausgerüstet ist.

**15.** Elektrisches/elektronisches Gerät nach einem der Ansprüche 1 bis 14,
**dadurch gekennzeichnet, dass** der Adapter (4) mit zumindest einer Datenspeichereinheit ausgerüstet ist.

**16.** Elektrisches/elektronisches Gerät nach einem der Ansprüche 1 bis 15,
**dadurch gekennzeichnet, dass** der Adapter (4) mit zumindest einem Energiespeicher ausgerüstet ist.

**17.** Elektrisches/elektronisches Gerät nach einem der Ansprüche 1 bis 16,
**dadurch gekennzeichnet, dass** der Adapter (4) mit zumindest einer den Funkbetrieb ermöglichenden Einheit ausgerüstet ist.
